# EUROPEAN PATENT APPLICATION

(11) **EP 0 613 145 A2**
(43) Date of publication of application: **31.08.1994**
(21) Application number: 94300728.6
(22) Date of filing: 01.02.1994
(51) Int. Cl.: G11B 27/34, G11B 27/034, G06F 3/033

(54) **Card file graphical user interface with visual representation of video data**

(30) Priority: 26.02.1993 US 24271
(71) Applicant: SONY ELECTRONICS INC., Park Ridge, New Jersey 07656-8003 (US)
(72) Inventor: Duffy, Robert, Milpitas, California 95035 (US)
(74) Representative: Nicholls, Michael John

(57) **Abstract**

A card file graphical user interface includes at least one central processing unit (CPU) coupled through appropriate input/output (I/O) circuitry to input devices, such as a cursor control device, and a display device. The CPU is further coupled to a storage device for the storage of data and programs including a database for display through the card file graphical user interface. The database comprises a plurality of source logs wherein each source log comprises at least one point. A card file window is provided for display on the display device and provides user selectable functions and bars for control and manipulation of the display of the database. For each source log, there is a corresponding index card, and the index cards are displayed within the card file window. The index cards display graphical information in a graphical display window displaying either a single point or a sequence of points for the corresponding source log. The index cards also display textual information for the graphical information displayed.

## Description

The present invention relates to apparatus and methods for displaying graphic information, and more particularly, the present invention relates to a computer controlled display system for displaying a card file graphical user interface including video data.

Over the past decade, a variety of graphic user interfaces have been developed to ease human interaction with computer systems. Many display systems utilize metaphors in the design of the interface as a way of maximizing human familiarity, and conveying information between the user and the computer. It is common for computer systems incorporating so-called "object oriented" display systems to utilize multiple "windows" on a display in which combinations of text and graphics are disposed. The display systems utilize familiar metaphors, such as desktops, control panels, notebooks and the like, such that the interface takes advantage of existing human mental structures to permit a user to draw upon the metaphor analogy to understand the requirements of the particular computer system.

It is well known that designing around a familiar metaphor helps reduce human learing time. (See for example, Patrick Chan, "*Learning Considerations in User Interface Design:* The Room Model", Report CS-84-16, University of Waterloo Computer Science Department,

Ontario, Canada, July, 1984, and the references cited therein.) The ability to operate on images or objects which relate the user to actual objects on, for example, a desktop, results in a stronger man-machine interface. (See for example, D. Robson, *"Object Oriented* S*oftware Systems",* BYTE, August 1991, page 74, Vol. 6, No. 8; L. Tesler, *"The Smalltalk Environment",* BYTE, August 1981, page 90, Vol. 6, No. 8; and Smith, et al., "*Star User Interface:* An Overview", National Computer Conference, 1982.

Research in interface design using metaphors in man-machine interfaces may be applied to computer controlled editing systems to incorporate and integrate various production media resources, such as special effects, music, graphics and the like. In the case of an editing system, a variety of resources must be integrated, scheduled and coordinated with one another to obtain a complete multi-media product. Users of computer controlled editing systems are generally familiar with the individual resources and the coordination of those resources to develop a finished product. Accordingly, the "windows" utilized in a video editing system may be designed such that the metaphor of the interface takes advantage of the knowledge of the user in operating discrete devices (for example, a video tape recorder or music synthesizer). The window may, therefore, take the form of a control panel for the video tape recorder, which includes the controls of play, reverse, record and the like. Similarly, the window may provide an area on the display screen in which movies, takes, or particular scenes are displayed for the user to edit.

A computer controlled editing system may allow a user of the system to integrate source material from a variety of multi-media resources to generate a final production. One problem associated with editing systems is that the editing systems often fail to provide the user an organized and visual display of the source information including individual frames of video so that the user may select source material for editing. As will be described, the present invention provides a method and apparatus for viewing a data base of source material, including video data, in a window-based card file graphical user interface.

The present invention provides apparatus and methods for use in computer display systems, and in particular, a card file graphical user interface for use in computer controlled multi-media editing systems. A display system including at least one central processing unit (CPU) is coupled through appropriate input/output (I/O) circuitry to input devices, such as a cursor control device. The CPU is further coupled to a storage device for the storage of data and programs including a database for display through the card file graphical user interface. The CPU is also coupled to a display device on which the present invention's user interface is displayed. The database comprises a plurality of source logs wherein each source log comprises at least one point. The source logs consist of selected portions of audio and/or video generated from various media resources, and the source logs provide material for editing or re-editing of a production in the computer controlled editing system.

The card file graphical user interface of the present invention comprises a card file window. The card file window is displayed on the display device and provides user selectable functions and bars for control and manipulation of the display of the database. For each source log, there is a corresponding index card, and the index cards are displayed within the card file window. The index cards display graphical information in a graphical display window displaying either a single point or a sequence of points for the corresponding source log. The index cards also display textual information specifying a section title, a scene and take number and text description for the graphical display. In addition, the index cards include an audio/video indicator that indicates whether the point displayed in the graphical display window comprises audio and/or video. A user may scroll through the index cards by selecting a forward or reverse arrow icon. The card file window also comprises a user selectable view bar function wherein a short view consisting of only the scene and take number is displayed.

The invention will be further described in the following detailed description of an exemplary embodiment of the invention, with reference to the accompanying drawings, in which:-

Figure 1 is a functional block diagram illustrating one possible computer display system incorporating the teachings of the present invention.

Figure 2 illustrates a card file graphical user interface incorporating the teachings of the present invention.

Figure 3 illustrates an index card including graphical and textual data configured in accordance with the present invention.

Figure 4 illustrates a card file graphical user interface, including an extended area for an index card, configured in accordance with the present invention.

Figure 5 illustrates a card file graphical user interface, including a plurality of index cards, configured in accordance with the present invention.

Figure 6 illustrates a file menu for the card file graphical user interface configured in accordance with the present invention.

**Figure 7** illustrates an edit menu for the card file graphical user interface configured in accordance with the present invention.

**Figure 8** illustrates a cards menu for the card file graphical user interface configured in accordance with the present invention.

**Figure 9** illustrates a search menu for the card file graphical user interface configured in accordance with the present invention.

**Figure 10** illustrates the short view of the card file graphical user interface configured in accordance with the present invention.

The detailed descriptions which follow are presented largely in terms of display images, algorithms, and symbolic representations of operations of data bits within a computer memory. These algorithmic descriptions and representations are the means used by those skilled in the data processing arts to most effectively convey the substance of their work to others skilled in the art.

An algorithm is here, and generally, conceived to be a self consistent sequence of steps leading to a desired result. These steps are those requiring physical manipulations of physical quantities. Usually, though not necessarily, these quantities take the form of electrical or magnetic signals capable of being stored, transferred, combined, compared, and otherwise manipulated. It proves convenient at times, principally for reasons of common usage, to refer to these signals as bits, values, elements, symbols, characters, images, terms, numbers, or the like. It should be borne in mind, however, that all of these and similar terms are to be associated with the appropriate physical quantities and are merely convenient labels applied to these quantities.

In the present case, the operations are machine operations performed in conjunction with a human operator. Useful machines for performing the operations of the present invention include general purpose digital computers or other similar devices. In all cases, there should be borne in mind the distinction between the method operations of operating a computer and the method of computation itself. The present invention relates to method steps for operating a computer and processing electrical or other physical signals to generate other desired physical signals.

The present invention also relates to apparatus for performing these operations. This apparatus may be specially constructed for the required purposes, or it may comprise a general purpose computer selectively activated or reconfigured by a computer program stored in the computer. The algorithms, methods and apparatus presented herein are not inherently related to any particular computer. In particular, various general purpose machines may be used with programs in accordance with the teachings herein, or it may prove more convenient to construct more specialized apparatus to perform the required method steps. The required structure for a variety of these machines will appear from the description given below. Machines which may perform the functions of the present invention include those manufactured by Sony Corporation of America, as well as other manufacturers of computer systems.

The present invention discloses apparatus and methods for displaying a card file graphical user interface on a computer display. In the following description, numerous specific details are set forth such as computer system configurations, window elements, icons, desktop sizes, metaphors, window configurations and arrangements, etc. in order to provide a thorough understanding of the present invention. However, it will be apparent to one skilled in the art that the present invention may be practiced without these specific details. In other instances, well known circuits, structures and the like are not described in detail so as not to obscure the present invention unnecessarily.

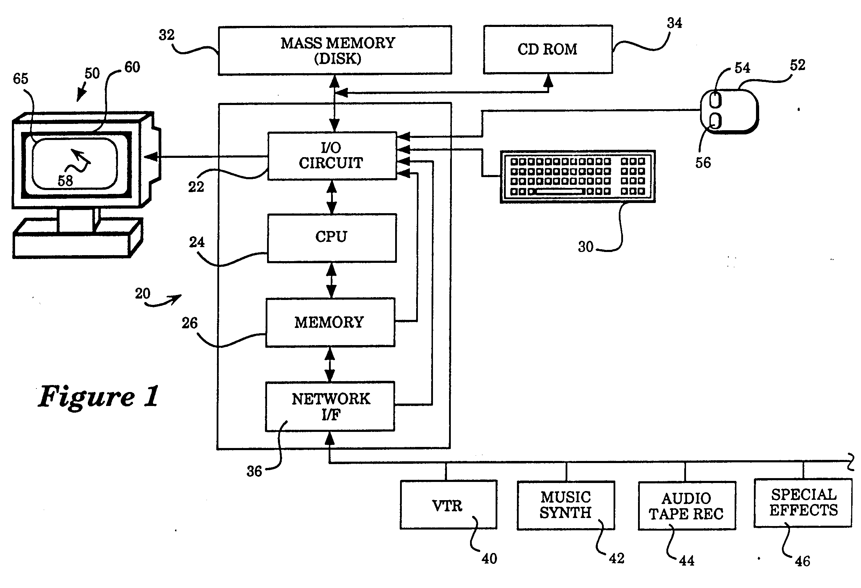

Referring now to **Figure 1,** the hardware configuration of the present invention is conceptually illustrated. The figure illustrates a computer system for generating a window-based graphic user interface in accordance with the teachings of the present invention. As illustrated, the computer system includes a computer **20** which comprises four major components. The first of these is an input/output (I/O) circuit **22**, which is used to communicate information in appropriately structured form to and from other portions of the computer **20**. In addition, computer **20** includes a central processing unit (CPU) **24** coupled to the I/O circuit **22** and to a memory **26**. These elements are those typically found in most computers and, in fact, computer **20** is intended to be representative of a broad category of data processing devices.

Also shown in **Figure 1** is a keyboard **30** for inputting data and commands into computer **20** through the I/O circuit **22**, as is well known. Similarly, a CD ROM **34** is coupled to the I/O circuit **22** for providing additional programming capacity to the system illustrated in **Figure 1**. It will be appreciated that additional devices may be coupled to the computer **20** for storing data, such as magnetic tape drives, buffer memory devices, and the like. A network interface **36** is coupled to both the memory **26** and the I/O circuit **22**, to permit the computer **20** to communicate along a network **38** which is coupled to other system resources. For example, in a video editing environment, the computer **20** may be coupled over the network **38** to a video tape recorder **40**, a music synthesizer **42**, an audio tape recorder **44**, and, special effects resource **46**, as shown.

A display monitor **50** is coupled to the computer **20** through the I/O circuit **22**. Any well known variety of cathode ray tube (CRT), liquid crystal or other displays may be utilized as display **50**. A cursor control device **52** includes switches **54** and **56** for signally the CPU **24** in accordance with the teachings of the present invention. Cursor control device **52** (commonly referred to a "mouse") permits a user to select various command modes, modify graphic data, and input other data utilizing switches **56** and **54**. More particularly, the cursor control device **52** permits a user to selectively position a cursor **58** at any desired location on a display screen **60** of the display **50**. As illustrated in **Figure 1**, the cursor **58** is disposed with a window **65** in the present invention's graphic user interface, to be described more fully below. Moreover, in the presently preferred embodiment, the present invention's window-based user interface is generated and displayed using software stored in either memories **26**, **32** or CD ROM **34**, and executed by the CPU **24**.

In the presently preferred embodiment, cursor control **52** utilizes well known apparatus and methods for signaling CPU **24** of positional changes of cursor **58** by movement of the cursor control over a surface. However, it will be appreciated by one skilled in the art that a variety of well known cursor control devices may be utilized by the present invention, including other control devices such as mechanical mice, trackballs, joy sticks, graphic tablets, other keyboard inputs and the like. The cursor control **52** in **Figure 1** is intended to encompass all such equivalent devices.

The card file graphical user interface of the present invention displays both graphical and textual information associated with a database. Typically, the database is generated from a computer controlled editing system to incorporate and integrate various production media resources. As an example, a computer controlled editing system may provide a means for a user of the computer controlled editing system to generate source logs. The source logs comprise selected portions of audio and/or video generated from the various media resources. Each source log comprises a plurality of points or frames. The source logs comprise source material for use in the computer controlled editing system that allows a user to select the source material for editing or re-editing of a production. For example, to create a source log, a user may select a media resource, such as a video tape player, and command the computer controlled editing system to capture a selected portion of the video generated by the video tape player. The selected portion of the video captured constitutes a source log, and each frame of the video comprises a point.

The source log generated may comprise video, one channel of audio, two channels of audio or any combination thereof. The plurality of source logs generated for editing of a particular multi-media production may be arranged into a file such that the file contains source logs for the editing or re-editing of that particular production. As will be described more fully below, the card file graphical user interface of the present invention operates in conjunction with a database comprising source logs. Although the present invention is described in conjunction with a computer controlled editing system that generates source logs, any database comprising source material for use in a computer controlled editing system could be used in accordance with the teachings of the present invention.

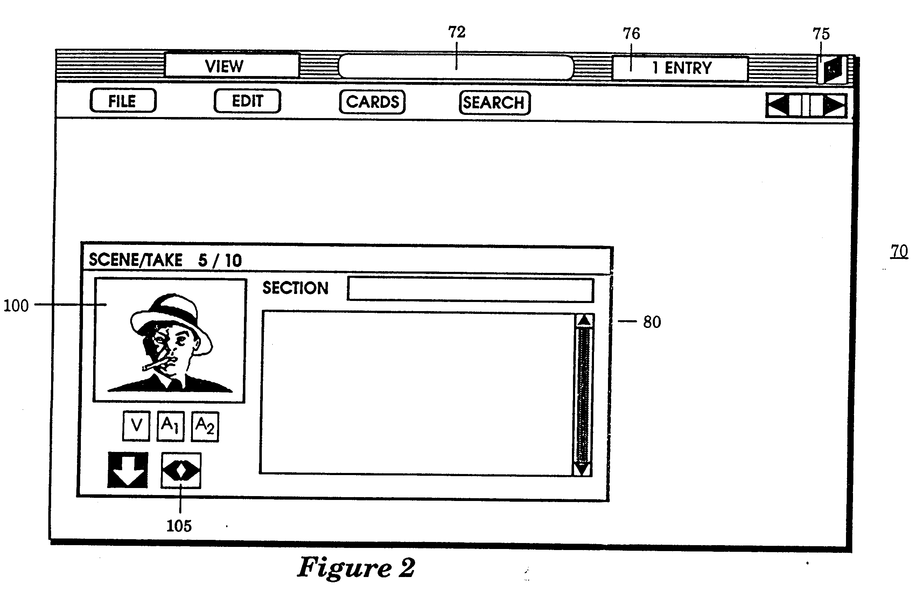

Referring to **Figure 2**, a card file graphical user interface incorporating the teachings of the present invention is illustrated. The card file graphical user interface comprises a card file window **70**. In a preferred embodiment of the present invention, the card file window **70** is one of a plurality of overlapping windows displayed on a computer display device. The card file window **70** may be displayed anywhere on the desktop of the computer display. To move the card file window **70** within the computer workspace, the user places the cursor, via a cursor control device, over a window control bar **72**, and activates a switch on the cursor control device. With the cursor control device activated, the user may drag the cursor across the desktop workspace to move the card file window **70** to a desired location. To close the card file window **70** such that the card file graphical user interface is no longer active, the cursor control is placed over icon **75**, and by depressing a switch on the cursor control device, the card file window **70** is closed and no longer appears on an active portion of the desktop workspace.

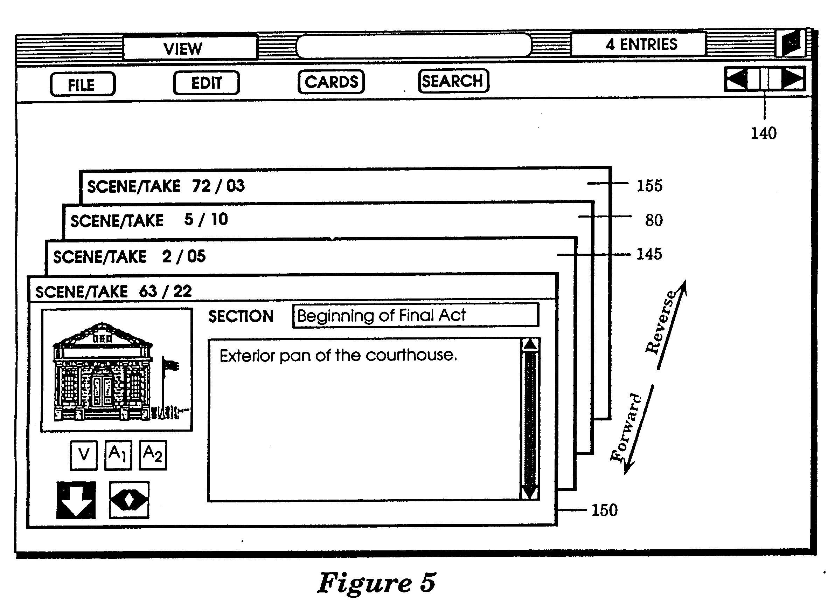

In **Figure 2**, the card file window **70** comprises an index card **80**. The card file window may comprise a plurality of index cards as will be described more fully below in conjunction with **Figures 5 - 9**. The card file window **70** also comprises an index card entry number **76**. The index card entry number **76** displays the number of index cards for the currently opened file. For the single index card **80** illustrated in **Figure 2**, the index card entry number **76** indicates "1 Entry". The index card **80** allows the user to view graphical and textual information associated with a source log. The index card **80** comprises, in part, a graphical display window **100**. For each source log in the database, there is a corresponding index card. Correspondingly, index card **80** displays graphical and textual data for one source log entry. The graphical information for each source log is displayed in the graphical display window **100**. The graphical display window **100** displays either a single point or a sequence of points for the corresponding source log.

The user may view any point in the corresponding source log. For example, if a source log comprises ten frames of video, then the entire ten frames may be sequentially displayed through the graphical display window **100**. In order to view the ten frames of video for the preceding example, the user places the cursor over the arrow icons **105** and selects the arrow, via the cursor control device, in a forward or reverse direction. If a user selects the arrow icon **105** in the forward direction, then the ten frames of video are sequentially displayed through the graphical display window **100** in an order in which the video frames were captured during creation of the source log. Alternatively, if a user selects the arrow icon **105** in the reverse direction, then the ten frames of video are sequentially displayed through the graphical display window **100** in a reverse order in which the video frames were captured during creation of the source log. Therefore, the graphical display window **100** provides the user a means to view graphical information associated with a source log either by viewing a single point or by viewing a sequence of points.

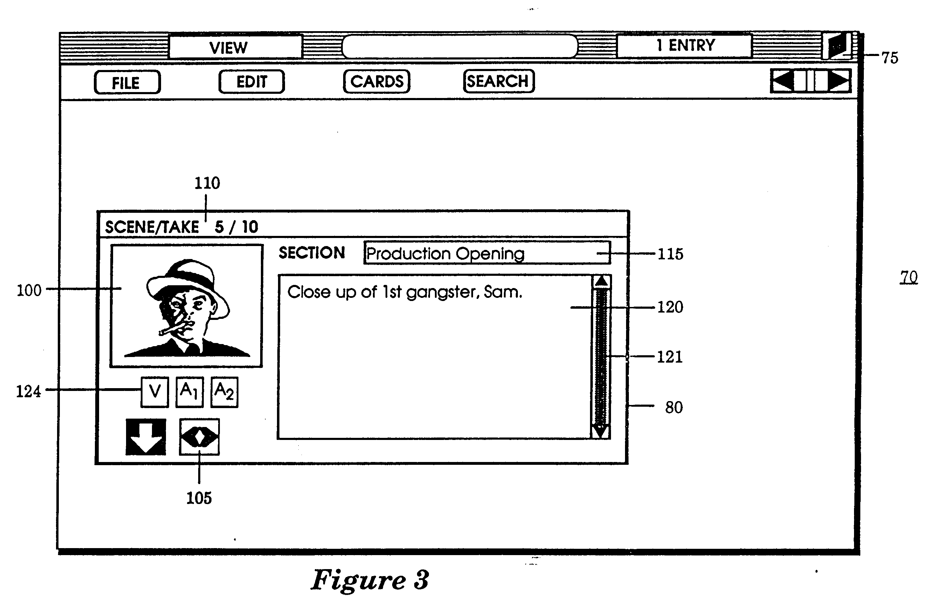

Referring to **Figure 3**, an index card including graphical and textual data configured in accordance with the present invention is illustrated. For each point in the source log, there is corresponding textual data. The textual data comprises a title of a section, a description of the point, and an indication of whether the point comprises a single channel of audio, two channels of audio, video or any combination thereof. In addition, scene and take information is provided for each index card identifying the origin of the source log for the production. For the example illustrated in **Figure 3**, the title of the section is "Production Opening" and appears in a section area **115**. The user may enter the information directly in the section area **115** from a keyboard or any other character generating input device. In an area immediately below the section area **115**, each index card comprises a text display window **120**. The text display window **120** provides the user a means to enter text to describe the points for the source log. For the example illustrated in **Figure 3**, the point or frame of video displayed in the graphical display window **100** is a "Close up of 1st Gangster, Sam". In text display window **120**, a user may directly enter the text from a keyboard or any other character generating input device. The text display window **120** comprises a scroll bar **121**. The scroll bar **121** allows the user to view text exceeding the size of the text display window **120** by selecting the up or down arrow on the scroll bar **121**.

In addition to the section and textual description information, each index card comprises audio/video indicators **124**. For each point in the source log, the database comprises video, one channel of audio, two channels of audio or any combination thereof. The audio/video indicators **124** are illuminated to specify whether the point displayed in graphical display window **100** comprises video, one channel of audio, two channels of audio, or any combination thereof. Each index card also comprises scene/take identification field **110**. Data for the scene/take identification field is entered through a menu item selectable on the card index window **70** as will be described more fully below. For the example index card **80** illustrated in **Figure 3**, the scene/take identification field **110** indicates that the source log is from the tenth take for the fifth scene of the production.

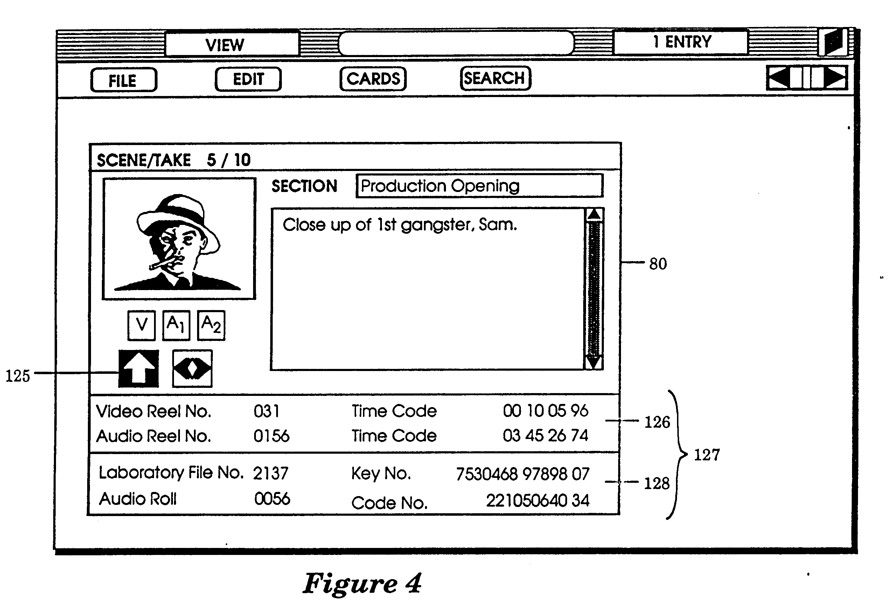

Referring to **Figure 4**, a card file graphical user interface, including an extended area for an index card, configured in accordance with the present invention is illustrated. In addition to the textual information described above, information identifying each multi-media resource used for generating the corresponding source log is provided in an extended area **127**. As shown on **Figure 4,** the extended area **127** displays a reel identification field **126** and a library identification field **128**. The reel identification field **126** displays the audio reel number used to generate the source log and a corresponding time code for the audio reel number. Similarly, the reel identification field **126** displays a video reel for which the corresponding source log originated and the corresponding time code on the video reel number. The library identification field **128** displays information from previous editing such as a laboratory file number with a corresponding key number and an audio roll number with a corresponding code number. As one skilled in the art will appreciate, additional information may be displayed in extended area **127** such as identification information for media stored on a laser disc.

The extended area **127** displays information which the user of the computer controlled editing system may not require knowledge in all stages of the editing process. Therefore, at the beginning of the edit session, the user may desire not to view the information provided in the extended area **127**. Therefore, an arrow icon **125** is provided which allows the user to select whether the extended area **125** is displayed. With the use of a cursor control device, the user places the cursor over the arrow icon **125** and activates a switch on the cursor control device to display or hide the extended area **127**. When the arrow icon **125** is pointed upward, the extended area **127** is displayed within the card index window as shown in **Figure 4**.
Alternatively, when the arrow icon **125** is pointed downward, the extended area **127** is not displayed. Therefore, the extended area **127** provides a means to display additional source log information when display of such information is desired by the user.

Referring to **Figure 5**, a card file graphical user interface, including a plurality of index cards, configured in accordance with the present invention is illustrated. When editing an audio/video, the user will utilize a plurality of source logs. Therefore, the card file system of the present invention provides the user the ability to view both graphical and textual information associated with each source log. The card file user interface comprises an index card select **140**. By using the cursor control device, the user may place the cursor over a right arrow on the index card select **140**. If the user then depresses a switch on the cursor control device, the index cards scroll in a forward direction as indicated by the arrow on **Figure 5**. As the index cards are scrolled, a different index card appears in the front for visual display to the user. In a similar manner, the user may select and/or scroll through the index cards in a reverse direction by selecting a left arrow on the card index select **140**. In this way, the user may scroll through the index cards by continuously selecting the index card select **140**. In addition to selecting a index card for front display by index card select **140**, the user may select any index card by placing the cursor on the corresponding index card and depressing a switch on the cursor control device to select the index card to appear as the front index card. Because the scene/take information is visible to the user, the user may easily directly select an index card for front display.

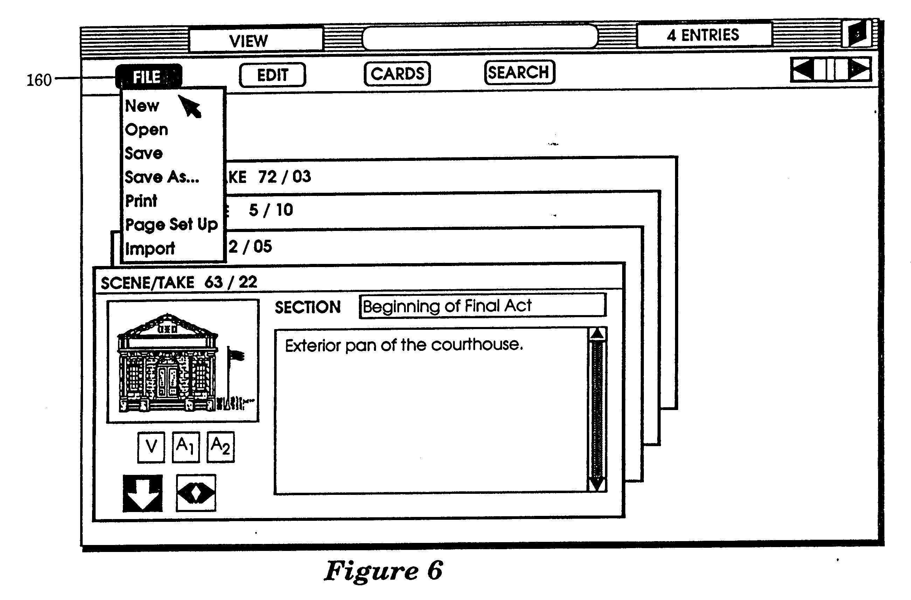

Referring to **Figure 6**, a file menu for the card file graphical user interface configured in accordance with the present invention is illustrated. Upon initially opening the card file window, the user selects or creates a file to view. Each file in the card file graphical user interface corresponds to a plurality of source logs for editing. As shown in **Figure 6**, a file menu **160** comprises a plurality of selections. Specifically, the file menu **160** allows a user to create a new file, open an existing file, save the currently open file and save the currently opened file under a different file name. In addition, the file menu **160** comprises a print function, a page set up function and an import function. The print function prints the index cards in the file to a printer coupled to the computer system, and the page set up function allows the user to specify page attributes for printing the index cards. The import function permits index cards from other files to be imported into the currently opened file.

The functions selectable from the file menu **160** may comprise additional sub-function menus. For example, by selecting the open function, a window comprising a sub-menu is displayed, and the user may enter the file name for the file to be opened in the sub-menu window. Likewise, any number of sub-menus for the functions may be provided with the card file graphical user interface without deviating from the sprit and scope of the present invention.

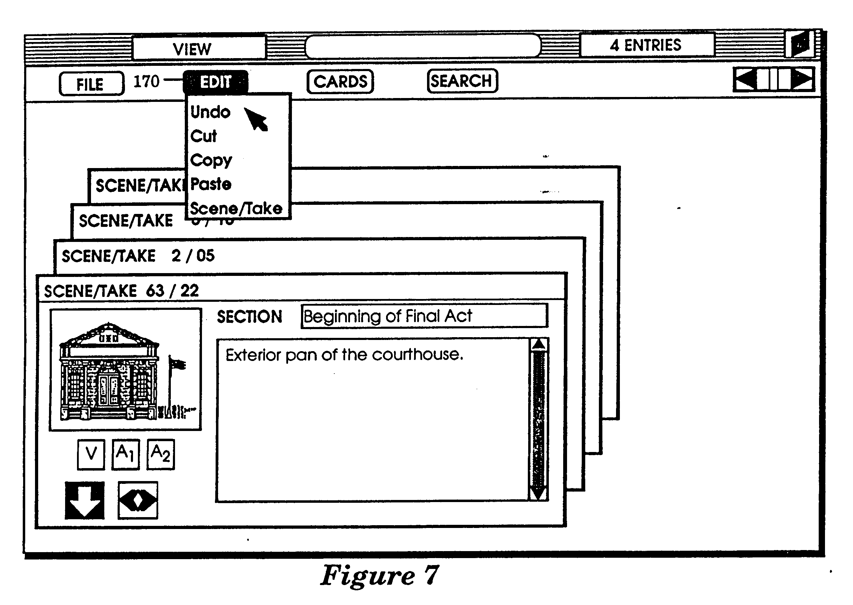

Referring to **Figure 7**, an edit menu for the card file graphical user interface configured in accordance with the present invention is illustrated. When a user selects the edit menu **170** via a cursor control device, a plurality of edit functions are displayed in a menu. Specifically, the edit menu **170** comprises an undo function, a cut function, a copy function, a paste function and a scene/take selection. When the undo function is selected, the last entry and/or the last selection made by the user is nullified. The cut function allows the user to select a portion of textual information to be deleted from an index card, and the copy function permits the user to copy a selected portion of textual information. The copy/cut functions and the paste function allow the user to copy/cut information from one index card and paste it onto another. For example, a number of cards may have the same section title. Therefore, the user may copy the section title from one card and subsequently paste it into subsequent cards having the same section title. The edit menu **170** also comprises the scene/take selection. When the user selects the scene/take selection, a sub-menu is displayed which prompts the user to enter the scene and the take for the corresponding index card. In addition to initially entering the scene/take information, the user may edit the scene/take filed for an existing index card.

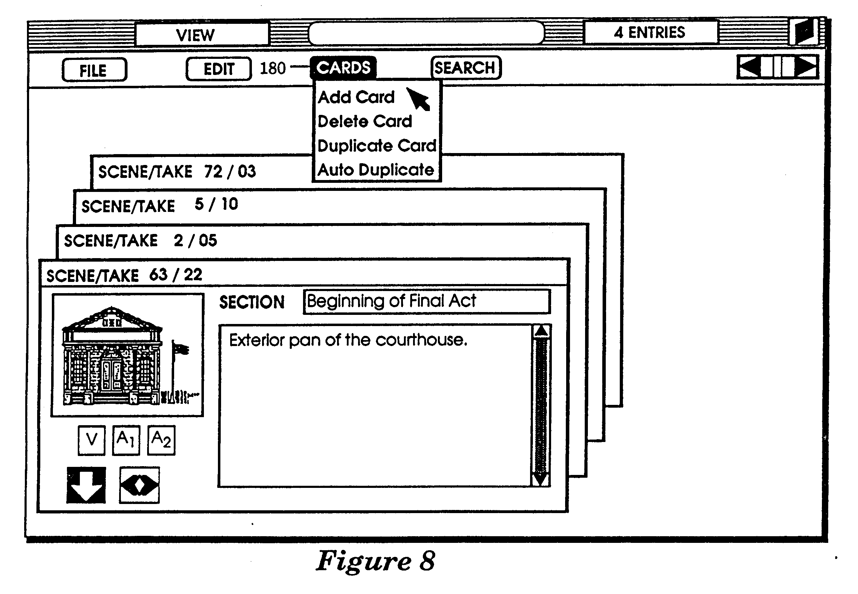

Referring to **Figure 8**, a cards menu for the card indexing graphical user interface configured in accordance with the present invention is illustrated. The cards menu comprises a plurality of index card related functions. Specifically, the cards menu **180** comprises an add card, delete card, duplicate card and auto duplicate card functions. The add card function permits the user to add an additional index card for display of textual and graphical information for a corresponding source log. The delete card function allows an index card to be deleted, and the duplicate card function allows all information on an entire index card to be duplicated into a second index card. The auto duplicate function allows the user to select portions of an index card for duplication. For example, if the user has a plurality of source logs corresponding to the same scene, the user may wish to duplicate some but not all of the information. In this way, selective portions of graphical and textual information may be duplicated, then additional information unique to that index card may be added to each duplicated index card.

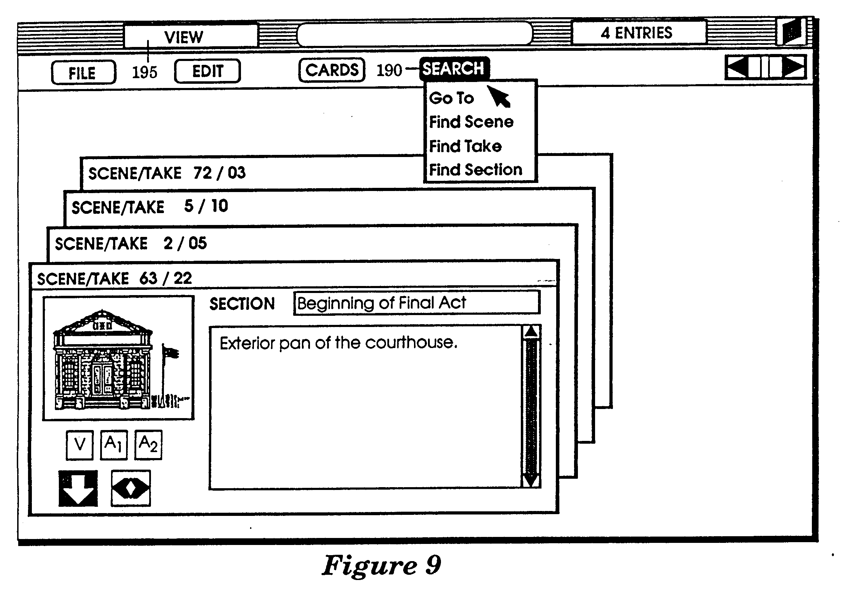

Referring to **Figure 9**, a search menu for the card file graphical user interface configured in accordance with the present invention is illustrated. A search menu **190** comprises a plurality of functions allowing the user to find a desired index card. The search menu **190** comprises a "go to" function, a "find scene" function, a "find take" function and a "find section" function. When the user selects the "go to" function, the user will be prompted by a sub-menu such that the user may enter scene/take information in a sub-menu field. The card file graphical user interface then finds the associated index card and places the index card as the front index card in the card file window. In addition, a user may find all index cards relating to particularly scene or take by invoking the find scene and find take functions respectively. Similarly, the find section function allows the user to find all index cards comprising the section title which the user provides in a find section sub-menu.

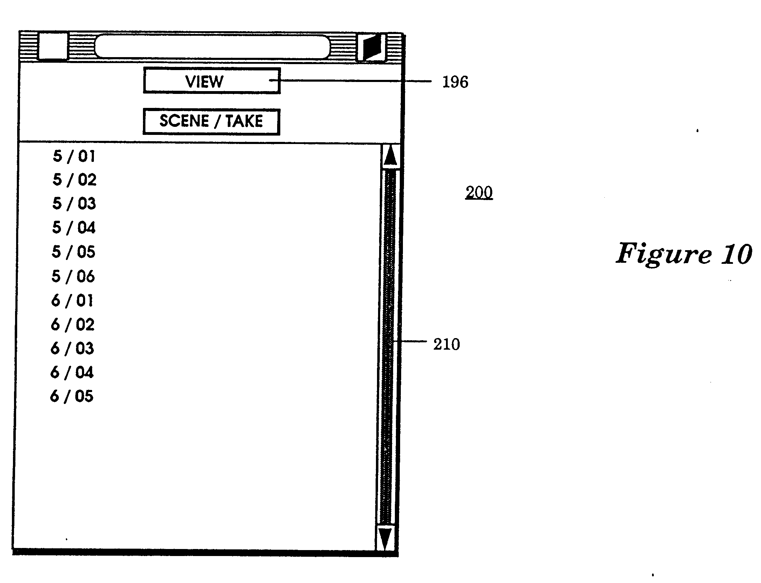

Still referring to **Figure 9**, a view bar **195** is illustrated in the upper left portion of the card index window. With use of the cursor control device, the user may select the view option **195** to display an alternate view of a card file window for the graphical user interface. Referring to **Figure 10** the short view of the card file graphical user interface is illustrated. As shown in **Figure 10,** for the alternate view or short form, only the scene/take information is displayed for each index card. The short form card index window **200** also comprises a scroll bar **210**. With the user of a cursor control device, the scroll bar **210** permits a user to pan in an upward and downward direction to view the scene/take information for all index cards. When in the short form view window 200, the user may select the view bar **196** to display the full view of the card file window of the graphical user interface.

Although the present invention has been described in terms of a preferred embodiment, it will be appreciated that various modifications and alterations might be made by those skilled in the art without departing from the spirit and scope of the invention. The invention should therefore be measured in terms of the claims which follow.

## Claims

1. In a computer controlled editing system for editing a multi-media production including a central processing unit (CPU) coupled to a display device and storage means coupled to said CPU, said storage means comprising a database including a plurality of source log entries wherein each of said source log entries comprises at least one point, an apparatus for displaying said database on said display device comprising:
card file window generation means coupled to said CPU for providing an active window for display of said database on said display device, said card file window generation means generating a card file window including a plurality of user selectable function menus and function bars for manipulating and controlling display of said database; and
index card generation means coupled to said CPU and said storage means for displaying at least one index card within said card file window, said card file generation means generating and displaying an index card for each of said plurality of source log entries, said index card generation means comprising,
graphical display means for displaying graphical information for each point in said source log corresponding to said index card,
textual display means for displaying textual information for each point in said source log corresponding to said index card.

2. The apparatus for displaying a computer controlled editing system database as set forth in claim 1 wherein said index card generation means further comprises extended area generation means for displaying origin data for said corresponding source log in an extended area of said index card, wherein said origin data specifies at least one multi-media resource for which said database comprises.

3. The apparatus for displaying a computer controlled editing system database as set forth in claim 2, wherein said extended area generation means comprises an arrow icon such that selection of said arrow icon in a first direction results in display of said extended area with said index card and selection of said arrow icon in a second direction results in non-display of said extended area.

4. The apparatus for displaying a computer controlled editing system database as set forth in claim 1, 2 or 3, wherein one of said plurality of user selectable function bars comprises a view bar, wherein selection of said view bar by said user results in said card file window generation means displaying only textual information identifying a scene and a take for said corresponding source log.

5. The apparatus for displaying a computer controlled editing system database as set forth in claim 1, 2, 3 or 4, wherein one of said plurality of user selectable function menus comprises a file menu, wherein said file menu comprises a plurality of file functions for manipulating and controlling said database.

6. The apparatus for displaying a computer controlled editing system database as set forth in claim 1, 2, 3, 4 or 5, wherein one of said plurality of user selectable function means comprises an edit menu, wherein said edit menu comprises a plurality of edit functions for editing said textual information.

7. The apparatus for displaying a computer controlled editing system database as set forth in any one of the preceding claims, wherein one of said plurality of function menus comprises a cards menu, wherein said cards menu comprises a plurality of cards functions for copying, adding and deleting said index cards.

8. The apparatus for displaying a computer controlled editing system database as set forth in any one of the preceding claims, wherein one of said plurality of function menus comprises a search menu, wherein said search menu comprises a plurality of search functions for finding a particular index card desired.

9. The apparatus for displaying a computer controlled editing system database as set forth in any one of the preceding claims, wherein said graphical display means comprises single point display means for displaying a single point of said course log on said index card.

10. The apparatus for displaying a computer controlled editing system database as set forth in any one of claims 1 to 8, wherein said graphical display means comprises sequential point display means for displaying a sequence of points contained in said source log on said index card.

11. The apparatus for displaying a computer controlled editing system database as set forth in claim 10, wherein said sequential point display means comprises means for displaying each point sequentially in a forward and reverse direction under user control.

12. The apparatus for displaying a computer controlled editing system database as set forth in any one of the preceding claims, wherein said textual display means displays scene and take information on said index card for said source log.

13. The apparatus for displaying a computer controlled editing system database as set forth in any one of the preceding claims, wherein said textual display means displays a section title for each index card displayed.

14. The apparatus for displaying a computer controlled editing system database as set forth in any one of the preceding claims, wherein said textual display means displays a text display window such that said user may enter text for describing said graphical information displayed.

15. The apparatus for displaying a computer controlled editing system database as set forth in any one of the preceding claims, wherein said textual display means displays an audio/video indication specifying whether said graphical information displayed comprises audio and/or video.

16. The apparatus for displaying a computer controlled editing system database as set forth in any one of the preceding claims, wherein said card file generation means comprises means for scrolling through said index cards in a forward and reverse direction.

17. In a computer controlled editing system for editing a multi-media production including a central processing unit (CPU) coupled to a display device and storage means coupled to said CPU, said storage means comprising a database including a plurality of source log entries wherein each of said source log entries comprises at least one point, a method for displaying said database on said display device comprising the steps of:
generating a card file window including a plurality of user selectable function menus and function bars for manipulating and controlling display of said database
displaying at least one index card within said card file window such that each index card displays data for each of said plurality of source log entries;
displaying graphical information in each of said index cards for each point in said source log corresponding to said index card; and
displaying textual information in each of said index cards for each point in said source log corresponding to said index card.

18. The method for displaying a computer controlled editing system database as set forth in claim 17 wherein displaying at least one index card further comprises the steps of displaying origin data for said corresponding source log in an extended area of said index card, wherein said origin data specifies at least one multi-media resource for which said database comprises.

19. The method for displaying a computer controlled editing system database as set forth in claim 18 wherein said step of displaying at least one index card comprises the step of providing an arrow icon so as to display said extended area with said index card when a user selects said arrow icon in a first direction.

20. The method for displaying a computer controlled editing system database as set forth in claim 17, 18 or 19, wherein one of said plurality of user selectable function bars comprises a view bar such that only textual information identifying a scene and a take for said corresponding source log is displayed when a user selects said view bar.

21. The method for displaying a computer controlled editing system database as set forth in claim 17, 18, 19 or 20, wherein said step of generating a card file window including a plurality of user selectable function menus comprises the step of providing a file menu, wherein said file menu comprises a plurality of file function for manipulating and controlling said database.

22. The method for displaying a computer controlled editing system database as set forth in any one of claims 17 to 21, wherein said step of generating a card file window including a plurality of user selectable function menus comprises the step of providing an edit menu, wherein said edit menu comprises a plurality of edit functions for editing said textual information.

23. The method for displaying a computer controlled editing system database as set forth in any one of claims 17 to 22, wherein said step of generating a card file window including a plurality of user selectable function menus comprises the step of providing a cards menu, wherein said cards menu comprises a plurality of cards functions for copying, adding and deleting said index cards.

24. The method for displaying a computer controlled editing system database as set forth in any one of claims 17 to 23, wherein said step of generating a card file window including a plurality of user selectable function menus comprises the step of providing a search menu, wherein said search menu comprises a plurality of search functions for finding a particular index card desired.

25. The method for displaying a computer controlled editing system database as set forth in any one of claims 17 to 24, wherein said step of displaying said graphical information comprises the step of displaying a single point of said source log on said index card.

26. The method for displaying a computer controlled editing system database as set forth in any one of claims 17 to 25, wherein said step of displaying said graphical information comprises the step of displaying a sequence of points contained in said source log on said index card.

27. The method for displaying a computer controlled editing system database as set forth in claim 26, wherein said step of displaying said graphical information further comprises the step of displaying each point sequentially in a forward and reverse direction under user control.

28. The method for displaying a computer controlled editing system database as set forth in any one of claims 17 to 27, wherein said step of displaying textual information in each of said index cards comprises the step of displaying scene and take information on said index card for said source log.

29. The method for displaying a computer controlled editing system database as set forth in any one of claims 17 to 28, wherein said step of displaying textual information in each of said index cards comprises the step of displaying a section title for each index card displayed.

30. The method for displaying a computer controlled editing system database as set forth in any one of claims 17 to 29, wherein said step of displaying textual information in each of said index cards comprises the step of displaying a text display window such that said user may enter text for describing said graphical information displayed.

31. The method for displaying a computer controlled editing system database as set forth in any one of claims 17 to 30, wherein said step of displaying textual information in each of said index cards comprises the step of displaying an audio/video indication specifying whether said graphical information displayed comprises audio and/or video.

32. The method for displaying a computer controlled editing system database as set forth in any one of claims 17 to 31, wherein said step of generating said card file window comprises the step of providing an icon to allow scrolling through said index cards in a forward and reverse direction when said icon is selected by a user.
